(19) Europäisches Patentamt / European Patent Office / Office européen des brevets

(11) **EP 2 373 078 B1**

(12) **EUROPEAN PATENT SPECIFICATION**

(45) Date of publication and mention
of the grant of the patent:
**27.08.2014 Bulletin 2014/35**

(21) Application number: **09828610.7**

(22) Date of filing: **06.11.2009**

(51) Int Cl.:
*H04W 24/02* (2009.01)        *H04W 24/08* (2009.01)
*H04L 25/02* (2006.01)        *H04L 25/03* (2006.01)
*H04B 7/08* (2006.01)

(86) International application number:
**PCT/CN2009/074854**

(87) International publication number:
**WO 2010/060350 (03.06.2010 Gazette 2010/22)**

(54) **METHOD AND APPARATUS FOR MULTI-USER ASYNCHRONOUS INFORMATION DETECTION**

VERFAHREN UND VORRICHTUNG ZUR ASYNCHRONEN INFORMATIONSERFASSUNG UNTER MEHREREN BENUTZERN

PROCÉDÉ ET APPAREIL DE DÉTECTION D INFORMATIONS ASYNCHRONES D UTILISATEURS MULTIPLES

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **28.11.2008 CN 200810227674**

(43) Date of publication of application:
**05.10.2011 Bulletin 2011/40**

(73) Proprietor: **Huawei Technologies Co., Ltd.
Guangdong 518129 (CN)**

(72) Inventor: **WANG, Xinsheng
Shenzhen
Guangdong 518129 (CN)**

(74) Representative: **Pfenning, Meinig & Partner GbR
Patent- und Rechtsanwälte
Theresienhöhe 13
80339 München (DE)**

(56) References cited:
EP-A1- 1 887 707            WO-A1-2004/010572
WO-A1-2009/016042       CN-A- 101 420 708
US-A1- 2002 037 061      US-A1- 2002 186 755
US-A1- 2005 185 733      US-B2- 7 058 422

- '2008. ICCS 2008. IIth IEE Singapore International Conference 19-21 Nov. 2008', article XIANG CHEN ET AL.: 'A Scheme of Multi-user Reusing One Slot on Enhancing Capacity of GSM/EDGE Networks. Communication Systems', pages 1574 - 1578, XP031400302
- 'MUROS Test Scenario Performance of DARP capable MS. Tdoc GP-081085 Agenda Item 7.1.5.10' 3GPP TSG GERAN #39 25 August 2008, FLORENCE, ITALY, pages 1 - 4, XP050413477

## Description

### FIELD OF THE INVENTION

The present invention relates to the field of wireless communications, and in particular, to a method and an apparatus for detecting multi-user asynchronous information.

### BACKGROUND OF THE INVENTION

In an existing Multi-User Reusing-One-Slot (MUROS) technology of a wireless communication system, the same timeslot is reused by at least two users. Two or more users coexist at the same time point, and the MUROS enables at least two users to reuse the same wireless resources.

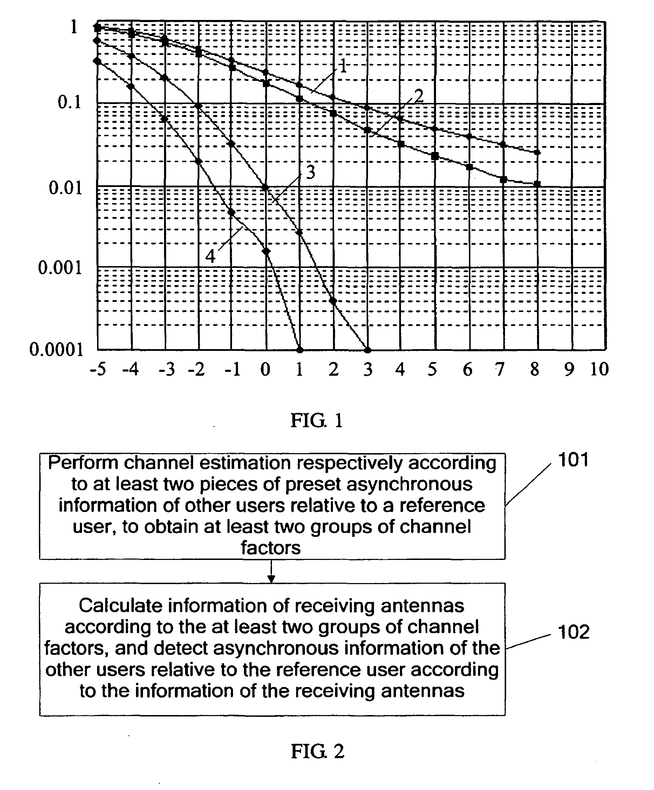

In the prior art, when the at least two user signals are received, it is generally assumed that the user signals are synchronous, and the at least two user signals are received according to the assumption. However, in practice, not all the users can be assured to be completely synchronous, and user asynchronous information exists. Different pieces of asynchronous information may have great influence on the receiving performance of the at least two users. Referring to FIG. 1, performance curve 1 represents the receiving performance when two asynchronous users are assumed to be synchronous, and the power of a target user is 10 dB lower than an interference user; performance curve 2 represents the receiving performance when two asynchronous users are assumed to be synchronous, and power offset does not exist between the target user and the interference user; performance curve 3 represents the receiving performance when two users are synchronous, and power offset does not exist between the target user and the intereference user; and performance curve 4 represents the receiving performance when two users are synchronous, and the power of the target user is 10 dB lower than the interference user. It can be seen from FIG. 1 that the receiving performance in the prior art is good when the two users are synchronous, but the prior art cannot meet the requirement of Quality of Service (QoS) when the two users are asynchronous. Therefore, in the case that the user is assumed to be synchronous without detecting the asynchronous information, the user demodulation performance is poor, the Bit Error Rate (BER) is high, the requirement of QoS may not be met, and the performance is severely degraded when the user asynchronous information is relatively serious. EP-188 770 7-A1 discloses a multi-cell joint-detection method in a time-slotted CDMA system wherein the channel estimation of the home-cell and/or neighbouring cells is adjusted according to a comparative delay difference between signals of users in different cells.

### SUMMARY OF THE INVENTION

Embodiments of the present invention provide a method and an apparatus for detecting multi-user asynchronous information, to detect user asynchronous information.

The following technical solutions are disclosed.

A method for detecting multi-user asynchronous information is provided, where the method includes;

performing channel estimation of at least two users, to obtain at least two pieces of frame synchronous information; and taking a pre-determined user as a reference, wherein the pre-determined user is one of the at least two users; calculating differences of frame synchronous information between one or more other users and a pre-determined user except the pre-determined user, to obtain asynchronous information of the one or more other users relative to the pre-determined user, wherein the one or more other users are among the at least two users; wherein the method further comprising performing timing advance adjustment on the one or more other users and the pre-determined user using the asynchronous information of the one or more other users relative to the pre-determined user.

An apparatus for detecting user asynchronous information is provided, where the apparatus includes:

a first calculation module, configured to perform channel estimation of at least two users, to obtain at least two pieces of frame synchronous information; and
a second calculation module, configured to calculate differences of frame synchronous information between one or more other users and a pre-determined user except a pre-determined user according to the at least two pieces of frame synchronous information obtained by the first calculation module, by taking the pre-determined user as a reference, to obtain synchronous information of the one or more other users relative to the pre-determined user wherein the pre-determined user is one of the at least two users, and the one or more other users are among the at least two users;
wherein further comprising:

a third detection module, configured to performing timing advance (TA) adjustment on the one or more other users and the pre-determined user using the asynchronous information of the one or more other users relative to the pre-determined user obtained by the second calculation module.

The technical solutions provided in the present invention have the beneficial effect that the user asynchronous information is detected, and the user receiving performance is greatly improved by using the detected asynchronous information.

## BRIEF DESCRIPTION OF THE DRAWINGS

FIG. 1 is a flow chart of a method for detecting multi-user asynchronous information according to Embodiment 1 of the present invention;
FIG. 2 is a flow chart of a method for detecting multi-user asynchronous information according to Embodiment 1 of the present invention;
FIG. 3 is a schematic view illustrating the effect of Embodiment 1 of the present invention;
FIG. 4 is a schematic structural view of an apparatus for detecting multi-user asynchronous information according to Embodiment 2 of the present invention;
FIG. 5 is a flow chart of a method for detecting multi-user asynchronous information according to Embodiment 3 of the present invention; and
FIG. 6 is a schematic structural view of an apparatus for detecting multi-user asynchronous information according to Embodiment 4 of the present invention.

## DETAILED DESCRIPTION OF THE EMBODIMENTS

To make the technical solutions, objectives and advantages of the present invention clearer, the embodiments of the present invention are described in detail below with reference to the accompanying drawings.
Embodiment 1 and 2 are not an embodiment showing the whole invention, but aspects thereof and useful background information.

### Embodiment 1

Referring to FIG. 2, in an embodiment, the present invention provides a method for detecting multi-user asynchronous information, and the embodiment of the present invention is described by taking two receiving antennas of two users as an example; however, the cases of multiple receiving antennas of multiple users are not excluded.
The method includes the following steps.
In step 101, channel estimation is performed respectively according to at least two pieces of preset asynchronous information of one or more other users relative to a reference user, to obtain at least two groups of channel factors.
Specifically,

$$\hat{\mathbf{h}}_{\mathrm{LS}}(i) = \left( \mathbf{A}_{i,t}{}^{H} \mathbf{A}_{i,t} \right)^{-1} \mathbf{A}_{i,t}{}^{H} \mathbf{R}_{t}, \quad i = -X, -(X-1), \cdots, (Y-1), Y \qquad (1)$$

where $\mathbf{R}_t$ represents received signals in a pilot section and $\mathbf{R}_t = \mathbf{A}_t\mathbf{h} + \mathbf{n}_t$, in which $\mathbf{R}_t = \begin{bmatrix} \mathbf{R}_{t,0}^T & \mathbf{R}_{t,1}^T \end{bmatrix}^T$, $\mathbf{A}_t$ represents

a matrix formed of sorted pilot information bits and $\mathbf{A}_t = \begin{bmatrix} \mathbf{A}_{t,0} & \mathbf{0} & \mathbf{A}_{t+i,1} & \mathbf{0} \\ \mathbf{0} & \mathbf{A}_{t,0} & \mathbf{0} & \mathbf{A}_{t+i,1} \end{bmatrix}$, $\mathbf{h}$ represents user channel

impulse responses and $\mathbf{h} = \begin{bmatrix} \mathbf{h}_{0,0}^T & \mathbf{h}_{1,0}^T & \mathbf{h}_{0,1}^T & \mathbf{h}_{1,1}^T \end{bmatrix}^T$, $\mathbf{n}_t$ represents Gaussian white noises and $\mathbf{n}_t = \begin{bmatrix} \mathbf{n}_{t,0}^T & \mathbf{n}_{t,1}^T \end{bmatrix}^T$,

and $(\cdot)^T$ represents transposition.
In the embodiment of the present invention, two users, i.e., User A and User B are respectively set, i represents user asynchronous information between User A and User B, and a range of i is defined in the technical report of MUROS research. In view of an undesirable circumstance, as for two users uplink reusing the same time slot, i is considered to be within two symbols, that is, when User A is a reference user, five possible values exist for i are: 2, 1, 0 ,-1, -2, which indicate that User B is 2, 1, 0 symbols advanced or delayed as compared with User A. Here, it is assumed that a minimum identifiable granularity of i is 1 symbol. A group of channel factors are calculated with respect to each asynchronous information that User B is advanced or delayed as compared with User A.

For example, (*X+Y*+1) groups of channel factors are obtained through Formula (1), when *i=-X,* one group of channel factors are obtained, when *i=-*(*X*-1), one group of channel factors are obtained, ..., and when *i=Y*, one group of channel factors are obtained.

When the number of the receiving antenna is M, and M≥1, and the number of useris N, and N≥1, the received signals may be expressed as $\mathbf{R}_t = \mathbf{A}_t\mathbf{h} + \mathbf{n}_t$, were

$$\mathbf{R}_t = \begin{bmatrix} \mathbf{R}_{t,0}^T & \mathbf{R}_{t,1}^T & \cdots & \mathbf{R}_{t,M-1}^T \end{bmatrix}^T,$$

$$\mathbf{A}_t = \begin{bmatrix} \mathbf{A}_{t,0} & 0 & \cdots & 0 & \mathbf{A}_{t+i_1,1} & 0 & \cdots & 0 & \mathbf{A}_{t+i_{N-1},N-1} & 0 & \cdots & 0 \\ 0 & \mathbf{A}_{t,0} & \cdots & 0 & 0 & \mathbf{A}_{t+i_1,1} & \cdots & 0 & 0 & \mathbf{A}_{t+i_{N-1},N-1} & \cdots & 0 \\ & \vdots & \vdots & & & \vdots & \vdots & & & \vdots & \vdots & \\ 0 & 0 & \cdots & \mathbf{A}_{t,0} & 0 & 0 & \cdots & \mathbf{A}_{t+i_1,1} & 0 & 0 & \cdots & \mathbf{A}_{t+i_{N-1},N-1} \end{bmatrix}_{M\times(M\times N)}$$

$$\mathbf{h} = \begin{bmatrix} \mathbf{h}_{0,0}^T & \mathbf{h}_{1,0}^T & \cdots & \mathbf{h}_{M-1,0}^T & \cdots & \mathbf{h}_{0,\ N-1}^T & \cdots & \mathbf{h}_{M-1,\ N-1}^T \end{bmatrix}^T,$$

and

$$\mathbf{n}_t = \begin{bmatrix} \mathbf{n}_{t,0}^T & \mathbf{n}_{t,1}^T & \cdots & \mathbf{n}_{t,M-1}^T \end{bmatrix}^T.$$

In Formula (1), M is the number of the receiving antenna, N is the number of the user, t+*i* is time point reached, and *i* is asynchronous information, that is, time differences of time points reached of other users relative to the time points reached of the reference user. By taking a first user as a reference, asynchronous information of the other users relative to the first user is correspondingly *i*, where asynchronous information of a second user relative to the first user is $i_1$, asynchronous information of a third user relative to the first user is $i_2$, ..., and asynchronous information of an Nth user relative to the first user is $i_{N-1}$.

Estimation of the at least two groups of channel factors is still performed through Formula (1), for example, by taking the first user as a reference, the asynchronous information of the second user relative to the first user is $i_1$, where $i_1 = -X,-1,...,Y$, the asynchronous information of the third user relative to the first user is $i_2$, where $i_2=-X,-1,...,Y$, and the asynchronous information of the Nth user relative to the first user is $i_{N-1}$, where $i_{N-1} = -X,-1,...,Y$. Asynchronous information of each user relative to the first user is respectively preset, that is, corresponding advanced or delayed symbols are preset for $i_1, i_2, ...,$ and $i_{N-1}$, so as to obtain a group of channel factors through Formula (1), and then each of $i_1, i_2, ...,$ and $i_{N-1}$ is preset, so as to further obtain a group of channel factors through Formula (1).

In step 102, information of a receiving antenna is calculated according to the at least two groups of channel factors, and asynchronous information of the one or more other users relative to the reference user is detected according to the information of the receiving antenna.

The calculating the information of the receiving antenna according to the at least two groups of channel factors, and detecting the asynchronous information of the one or more other users relative to the reference user according to the information of the receiving antenna includes:

calculating signal-to-noise ratios (SNRs) on the receiving antennas according to the obtained at least two groups of channel factors, and detecting the asynchronous information of the other users relative to the reference user according to the SNRs.

The calculating the SNRs on the receiving antennas according to the obtained at least two groups of channel factors, and detecting the asynchronous information of the other users relative to the reference user according to the SNRs includes:

calculating sums of the SNRs on at least two of M receiving antennas according to the obtained at least two groups of channel factors, to obtain at least two sums of SNRs, and determining preset user asynchronous information corresponding to a maximum sum of the SNRs of the at least two sums of SNRs to be the asynchronous information of the other users relative to the reference user, where M≥2.

The embodiment of the present invention is described by taking two users as an example, and the sums of SNRs on two receiving antennas are respectively calculated with respect to (X+Y+1) pieces of asynchronous information, to obtain (X+Y+1) sums of SNRs, and specifically:

$$Y_1 = \underset{i=-X,-(X-1),\cdots,Y}{\text{MAX}} \left\{ \frac{\left| \hat{h}_{LS}^{(1)'}(i) \right|^2}{\sigma_1^2} + \frac{\left| \hat{h}_{LS}^{(2)'}(i) \right|^2}{\sigma_2^2} \right\} \tag{2}.$$

In Formula (2), $Y_1$ represents the maximum sum of SNRs of the sums of SNRs calculated on two treceiving antennas with respect to (X+Y+1) pieces of asynchronous information. For example, when $i = -X$, an SNR on a first antenna plus an SNR on a second antenna is a first sum of SNRs, when $i = -(X-1)$, an SNR on the first antenna plus an SNR on the second antenna is a second sum of SNRs, ..., and when i=Y, an SNR on the first antenna plus an SNR on the second antenna is a (X+Y+1)th sum of SNRs.

Among the obtained (X+Y+1) sums of SNRs, the second sum of SNRs is the maximum, and i corresponding to the the second sum of SNRs is equal to-(X-1); in this case, $i = -(X-1)$ is determined to be asynchronous information of User B relative to User A.

Alternatively, the calculating the SNRs on the receiving antenna according to the obtained at least two groups of channel factors, and detecting the asynchronous information of the other user relative to the reference user according to the SNRs includes:

calculating the SNR on at least one of M receiving antennas according to the obtained at least two groups of channel factors, to obtain at least two SNRs, and determining preset asynchronous information corresponding to a maximum SNR of the at least two SNRs to be the asynchronous information of the other users relative to the reference user, where M≥1.

In this case, a sum of SNRs does not need to be calculated, only an SNR on one or more of the M receiving antennas needs to be calculated with respect to each piece of asynchronous information, and the preset asynchronous information corresponding to the maximum SNR is determined to be the asynchronous information of the one or more other users relative to the reference user.

Alternatively, the calculating the information of the receiving antenna according to the at least two groups of channel factors, and detecting the asynchronous information of the one or more other users relative to the reference user according to the information of the receiving antennas includes:

calculating energies on the receiving antennas according to the obtained at least two groups of channel factors, and detecting the asynchronous information of the one or more other users relative to the reference user according to the energies.

The calculating the energies on the receiving antenna according to the obtained at least two groups of channel factors, and detecting the asynchronous information of the one or more other users relative to the reference user according to the energies includes:

calculating sums of the energies on at least two of M receiving antennas according to the obtained at least two groups of channel factors, to obtain at least two sums of energies, and determining preset asynchronous information corresponding to a maximum sum of energies of the at least two sums of energies to be the asynchronous information of the one or more other users relative to the reference user, where M≥2.

The embodiment of the present invention is described by taking two users as an example, and the sums of energies on two receiving antennas are respectively calculated with respect to (X+Y+1) pieces of asynchronous information, to obtain (X+Y+1) sums of energies, and specifically:

$$Y_2 = \underset{i=-X,-(X-1),\cdots,Y}{\text{MAX}} \left\{ \left|\hat{h}_{LS}^{(1)'}(i)\right|^2 + \left|\hat{h}_{LS}^{(2)'}(i)\right|^2 \right\}$$

(3).

In Formula (3), $Y_2$ represents the maximum sum of energies of the sums of energies calculated on two treceiving antennas with respect to (X+Y+1) pieces of asynchronous information. For example, when *i=-X,* an energy on a first antenna plus an energy on a second antenna is a first sum of energies, when *i=-(X-1)*, an energy on the first antenna plus an energy on the second antenna is a second sum of energies, ..., and when i=Y, an energy on the first antenna plus an energy on the second antenna is a (X+Y+1)th sum of energies.

Among the obtained (X+Y+1) sums of energies, the second sum of energies is the maximum, and i corresponding to the the second sum of energies is equal to -(X-1); in this case, *i=-(X-1)* is determined to be asynchronous information of User B relative to User A.

Alternatively, the calculating the energies on the receiving antenna according to the obtained at least two groups of channel factors, and detecting the asynchronous information of the other user relative to the reference user according to the energies includes:

calculating the energy on at least one of M receiving antennas according to the obtained at least two groups of channel factors, to obtain at least two energies, and determining preset asynchronous information corresponding to a maximum energy of the at least two energies to be the asynchronous information of the other users relative to the reference user, where M≥1.

In this case, a sum of energies does not need to be calculated, only an energy on one or more of the M receiving antennas needs to be calculated with respect to each piece of preset asynchronous information, and the preset asynchronous information corresponding to the maximum energy is determined to be the asynchronous information of the one or more other users relative to the reference user.

The method further includes:

selecting one group of channel factors corresponding to the detected asynchronous information of the one or more other users relative to the reference user from the obtained at least two groups of channel factors; and

performing combined asynchronous detection on the one or more other users and the reference user using the detected asynchronous information of the one or more other users relative to the reference user and the selected channel factors, so as to improve the detection performance of the other users and the reference user.

Before the performing the combined asynchronous detection on the one or more other users and the reference user using the asynchronous information of the one or more other users relative to the reference user and the selected channel factors, the method further includes:

filtering the asynchronous information of the one or more other users relative to the reference user, to obtain more accurate asynchronous information; and

correspondingly, performing the combined asynchronous detection on the other users and the reference user using the filtered asynchronous information of the one or more other users relative to the reference user and the selected channel factors.

Alternatively, the method further includes:

performing timing advance (TA) adjustment on the one or more other users and the reference user using the detected asynchronous information of the one or more other users relative to the reference user, to keep the multiple users synchronous.

Before the performing the TA adjustment on the one or more other users and the reference user using the asynchronous information of the one or more other users relative to the reference user, the method further includes:

filtering the asynchronous information of the one or more other users relative to the reference user, to obtain more accurate asynchronous information; and

correspondingly, performing the TA adjustment on the one or more other users and the reference user using the filtered asynchronous information of the one or more other users relative to the reference user.

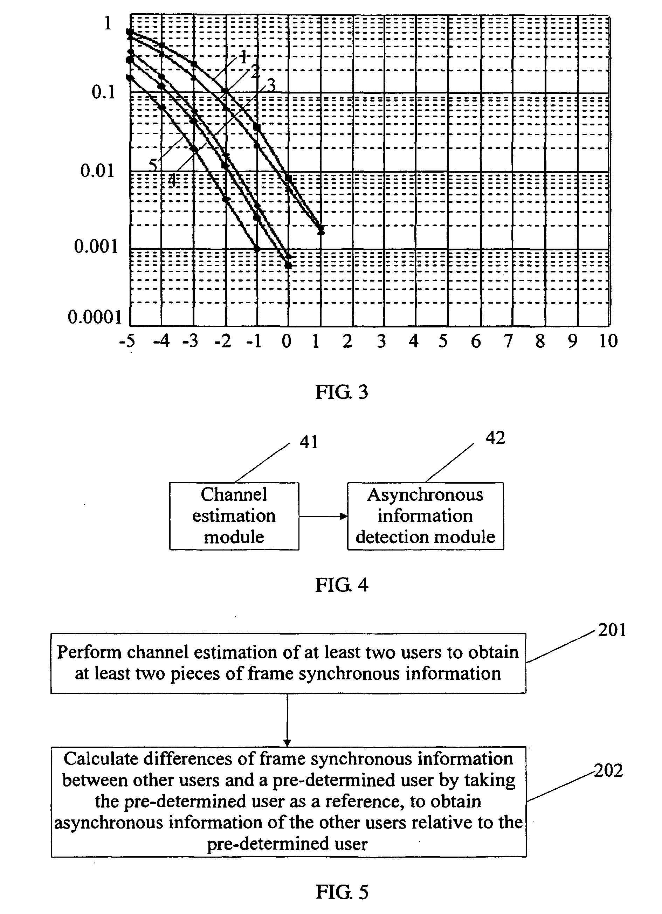

The method according to the embodiment of the present invention has the following beneficial effects. The user asynchronous information is detected, so as to greatly improve the receiving performance of the users, and the combined asynchronous detection of the users is performed using the asynchronous information, so as to greatly improve the detection performance of the users. The asynchronous information may be detected by calculating the SNRs on the receiving antennas, or by calculating the energies on the receiving antennas, and the detection method is flexible and diverse. The detected asynchronous information is filtered, so that the asynchronous information is more accurate, and asynchronous demodulation is performed on the users using the filtered asynchronous information, so as to greatly improve the detection performance and receiving performance of the users, and decrease the BER. FIG 3 is a schematic view illustrating the effect of the present invention, in which performance curve 1 represents the asynchronous detection performance of asynchronous information equal to 2 when power offset does not exist between a target user and an interference user; performance curve 2 represents the performance when power offset does not exist between the target user and the interference user and the two users are synchronous; performance curve 3 represents the asynchronous detection performance of asynchronous information equal to 2 when the power of the interference user is 10 dB higher than that of the target user; performance curve 4 represents the performance when the power of the interference user is 10 dB higher than that of the target user and the two users are synchronous; and performance curve 5 represents the reference performance of a single user.

**Embodiment 2**

Referring to FIG. 4, in an embodiment, the present invention provides an apparatus for detecting asynchronous information, and the embodiment of the present invention is described by taking two receiving antennas of two users as an example; however, cases of multiple receiving antennas of multiple users are not excluded.

The apparatus includes a channel estimation module 41 and an asynchronous information detection module 42.

The channel estimation module 41 is configured to perform channel estimation respectively according to at least two pieces of preset asynchronous information of one or more other users relative to a reference user, to obtain at least two groups of channel factors.

Specifically,

$$\hat{\mathbf{h}}_{LS}(i) = \left(\mathbf{A}_{i,t}{}^{H}\mathbf{A}_{i,t}\right)^{-1}\mathbf{A}_{i,t}{}^{H}\mathbf{R}_{t}, \quad i = -X, -(X-1), \cdots, (Y-1), Y \tag{4}.$$

where R, represents received signals in a pilot section and $\mathbf{R}_t = \mathbf{A}_t\mathbf{h} + \mathbf{n}_t$, in which $\mathbf{R}_t = \begin{bmatrix} \mathbf{R}_{t,0}^T & \mathbf{R}_{t,1}^T \end{bmatrix}^T$, $\mathbf{A}_t$ represents

a matrix formed of sorted pilot information bits and $\mathbf{A}_t = \begin{bmatrix} \mathbf{A}_{t,0} & \mathbf{0} & \mathbf{A}_{t+\Delta t,1} & \mathbf{0} \\ \mathbf{0} & \mathbf{A}_{t,0} & \mathbf{0} & \mathbf{A}_{t+\Delta t,1} \end{bmatrix}$, h represents user

channel impulse responses and $\mathbf{h} = \begin{bmatrix} \mathbf{h}_{0,0}^T & \mathbf{h}_{1,0}^T & \mathbf{h}_{0,1}^T & \mathbf{h}_{1,1}^T \end{bmatrix}^T$, $\mathbf{n}_t$ represents Gaussian white noises and

$\mathbf{n}_t = \begin{bmatrix} \mathbf{n}_{t,0}^T & \mathbf{n}_{t,1}^T \end{bmatrix}^T$, and $\cdot^T$ represents transposition.

In the embodiment of the present invention, two users, i.e., User A and User B are respectively set, i represents user asynchronous information between User A and User B, and a range of i is defined in the technical report of MUROS research. In view of an undesirable circumstance, as for two users uplink reusing the same time slot, i is considered to be within two symbols, that is, when User A is a reference user, five possible values exist for i are: 2, 1, 0 ,-1, -2, which inidacte that User B is 2, 1, 0, -1, or -2 symbols advanced or delayed as compared with User A. Here, it is assumed that a minimum identifiable granularity of i is 1 symbol. A group of channel factors are calculated with respect to each of asynchronous information that User B is advanced or delayed as compared with User A.

For example, (X + Y + 1) groups of channel factors are obtained through Formula (4), when *i*=-X, one group of channel factors are obtained, when *i*=-(X-1), one group of channel factors are obtained, ..., and when i=Y, one group of channel factors are obtained.

When the number of receiving antenna is M, and the number of users is N, the received signals may be

expressed as $\mathbf{R}_t = \mathbf{A}_t\mathbf{h} + \mathbf{n}_t$, where

$$\mathbf{R}_t = \begin{bmatrix} \mathbf{R}_{t,0}^T & \mathbf{R}_{t,1}^T & \cdots & \mathbf{R}_{t,M-1}^T \end{bmatrix}^T,$$

$$\mathbf{A}_t = \begin{bmatrix} \mathbf{A}_{t,0} & \mathbf{0} & \cdots & \mathbf{0} & \mathbf{A}_{t+i_1,1} & \mathbf{0} & \cdots & \mathbf{0} & \mathbf{A}_{t+i_{N-1},N-1} & \mathbf{0} & \cdots & \mathbf{0} \\ \mathbf{0} & \mathbf{A}_{t,0} & \cdots & \mathbf{0} & \mathbf{0} & \mathbf{A}_{t+i_1,1} & \cdots & \mathbf{0} & \mathbf{0} & \mathbf{A}_{t+i_{N-1},N-1} & \cdots & \mathbf{0} \\ & \vdots & \vdots & & & \vdots & \vdots & & & \vdots & \vdots \\ \mathbf{0} & \mathbf{0} & \cdots & \mathbf{A}_{t,0} & \mathbf{0} & \mathbf{0} & \cdots & \mathbf{A}_{t+i_1,1} & \mathbf{0} & \mathbf{0} & \cdots & \mathbf{A}_{t+i_{N-1},N-1} \end{bmatrix}_{M\times(M\times N)}$$

$$\mathbf{h} = \begin{bmatrix} \mathbf{h}_{0,0}^T & \mathbf{h}_{1,0}^T & \cdots & \mathbf{h}_{M-1,0}^T & \cdots & \mathbf{h}_{0,N-1}^T & \cdots & \mathbf{h}_{M-1,N-1}^T \end{bmatrix}^T,$$

and

$$\mathbf{n}_t = \begin{bmatrix} \mathbf{n}_{t,0}^T & \mathbf{n}_{t,1}^T & \cdots & \mathbf{n}_{t,M-1}^T \end{bmatrix}^T.$$

In Formula (4), M is the number of the receiving antenna, N is the number of the user, t+i is time point reached, and $i$ is asynchronous information, that is, time differences of time points reached of other users relative to the time points reached of the reference user. By taking a first user as a reference, asynchronous information of the other users relative to the first user is correspondingly $i$, where a synchronous information of a second user relative to the first user is $i_1$, asynchronous information of a third user relative to the first user is $i_2$, ..., and asynchronous information of an Nth user relative to the first user is $i_{N-1}$.

Estimation of the at least two groups of channel factors is still performed through Formula (4), for example, by taking the first user as a reference, the asynchronous information of the second user relative to the first user is $i_1$, where $i_1 = -X, -1, \cdots, Y$, the asynchronous information of the third user relative to the first user is $i_2$, where $i_2 = -X, -1, \cdots, Y$, and the asynchronous information of the Nth user relative to the first user is $i_{N-1}$, where $i_{N-1} = -X, -1, \cdots, Y$. A synchronous information of each user relative to the first user is respectively preset, that is, corresponding advanced or delayed symbols are preset for $i_1$, $i_2$, ..., and $i_{N-1}$, so as to obtain a group of channel factors through Formula (4), and then each of $i_1$, $i_2$, ..., and $i_{N-1}$ is preset, so as to further obtain a group of channel factors through Formula (4).

The asynchronous information detection module 42 is configured to calculate information of a receiving antenna according to the at least two groups of channel factors obtained by the channel estimation module 41, and detect asynchronous information of the one or more other users relative to the reference user according to the information of the receiving antenna.

The asynchronous information detection module 42 includes:

a first detection unit, configured to calculate SNRs on the receiving antenna according to the at least two groups of channel factors obtained by the channel estimation module 41, and detect the asynchronous information of the one or more other users relative to the reference user according to the SNRs.

The first detection unit is further configured to calculate sums of the SNRs on at least two of M receiving antennas according to the at least two groups of channel factors obtained by the channel estimation module 41, to obtain at least two sums of SNRs, and determine preset asynchronous information corresponding to a maximum sum of the SNRs of the at least two sums of SNRs to be the asynchronous information of the other users relative to the reference user, where M≥2.

The embodiment of the present invention is described by taking two users as an example, and the sums of SNRs on two receiving antennas are respectively calculated with respect to (X+Y+1) pieces of asynchronous information, to obtain (X+Y+1) sums of SNRs, and specifically:

$$Y_1 = \underset{i=-X,-(X-1),\cdots,Y}{\text{MAX}} \left\{ \frac{\left|\hat{h}_{LS}^{(1)'}(i)\right|^2}{\sigma_1^2} + \frac{\left|\hat{h}_{LS}^{(2)'}(i)\right|^2}{\sigma_2^2} \right\} \tag{5}.$$

In Formula (5), $Y_1$ represents the maximum sum of SNRs of the sums of SNRs calculated on two treceiving antennas with respect to (X+Y+1) pieces of asynchronous information. For example, when $i=-X$, an SNR on a first antenna plus an SNR on a second antenna is a first sum of SNRs, when $i=-(X-1)$, an SNR on the first antenna plus an SNR on the second antenna is a second sum of SNRs, ..., and when i=Y, an SNR on the first antenna plus an SNR on the second antenna is a (X+Y+1)th sum of SNRs.

Among the obtained (X+Y+1) sums of SNRs, the second sum of SNRs is the maximum, and i corresponding to the the second sum of SNRs is equal to -(X-1); in this case, $i=-(X-1)$ is determined to be asynchronous information of User B relative to User A.

Alternatively, the first detection unit includes:

> a second detection sub-unit, configured to calculate the SNRs on at least one of M receiving antennas according to the at least two groups of channel factors obtained by the channel estimation module 41, to obtain at least two SNRs, and determine preset asynchronous information corresponding to a maximum SNR of the at least two SNRs to be the asynchronous information of the other users relative to the reference user, where M≥1.

In this case, a sum of SNRs does not need to be calculated, only an SNR on one or more of the M receiving antennas needs to be calculated with respect to each piece of preset asynchronous information, and the preset asynchronous information corresponding to the maximum SNR is determined to be the asynchronous information of the one or more other users relative to the reference user.

Alternatively, the asynchronous information detection module 42 includes:

> a second detection unit, configured to calculate energies on the receiving antennaaccording to the at least two groups of channel factors obtained by the channel estimation module 41, and detect the asynchronous information of the one or more other users relative to the reference user according to the energies of the receiving antennas.

The second detection unit includes:

> a third detection sub-unit, configured to calculate sums of the energies on at least two of M receiving antennas according to the at least two groups of channel factors obtained by the channel estimation module 41, to obtain at least two sums of energies, and determine preset asynchronous information corresponding to a maximum sum of energies of the at least two sums of energies to be the asynchronous information of the one or more other users relative to the reference user, where M≥2.

The embodiment of the present invention is described by taking two users as an example, and the sums of energies on two receiving antennas are respectively calculated with respect to (X+Y+1) pieces of asynchronous information, to obtain (X+Y+1) sums of energies, and specifically:

$$Y_2 = \underset{i=-X,-(X-1),\cdots,Y}{\text{MAX}} \left\{ \left|\hat{h}_{LS}^{(1)'}(i)\right|^2 + \left|\hat{h}_{LS}^{(2)'}(i)\right|^2 \right\} \tag{6}.$$

In Formula (6), $Y_2$ represents the maximum sum of energies of the sums of energies calculated on two receiving antennas calculated with respect to (X+Y+1) pieces of asynchronous information. For example, when $i=-X$, an energy on a first antenna plus an energy on a second antenna is a first sum of energies, when $i=-(X-1)$, an energy on the first antenna plus an energy on the second antenna is a second sum of energies, ..., and when i=Y, an energy on the first antenna plus an energy on the second antenna is a (X+Y+1)th sum of energies.

Among the obtained (X+Y+1) sums of energies, the second sum of energies is the maximum, and i corresponding to the the second sum of energies is equal to -(X-1); in this case, $i=-(X-1)$ is determined to be asynchronous information of User B relative to User A.

Alternatively, the second detection unit includes:

a fourth detection sub-unit, configured to calculate the energy on at least one of M receiving antenna according to the at least two groups of channel factors obtained by the channel estimation module 41, to obtain at least two energies, and determine preset asynchronous information corresponding to a maximum energy of the at least two energies to be the asynchronous information of the other users relative to the reference user, where M≥1.

In this case, a sum of energies does not need to be calculated, only an energy on one or more of the M receiving antennas needs to be calculated with respect to each piece of preset asynchronous information, and the preset asynchronous information corresponding to the maximum energy is determined to be the asynchronous information of the one or more other users relative to the reference user.

The apparatus further includes:

a selection module, configured to select one group of channel factors corresponding to the one or more asynchronous information of the other users relative to the reference user detected by the asynchronous information detection module 32 from the at least two groups of channel factors obtained by the channel estimation module 41; and
a first detection module, configured to perform combined asynchronous detection on the one or more other users and the reference user according to the asynchronous information of the one or more other users relative to the reference user detected by the asynchronous information detection module 42 and the channel factors selected by the selection module, so as to improve the multi-user detection performance.

The apparatus further includes:

a first filtering module, configured to filter the asynchronous information of the one or more other users relative to the reference user detected by the asynchronous information detection module 42, to obtain more accurate asynchronous information.

Correspondingly, the first detection module is configured to perform the combined asynchronous detection on the one or more other users and the reference user according to the asynchronous information of the one or more other users relative to the reference user filtered by the first filtering module and the channel factors selected by the selection module, so as to improve the multi-user detection performance.

The apparatus further includes:

a second detection module, configured to perform TA adjustment on the one or more other users and the reference user according to the asynchronous information of the one or more other users relative to the reference user detected by the asynchronous information detection module 42, to keep the multiple users synchronous.

The apparatus further includes:

a second filtering module, configured to filter the asynchronous information of the one or more other users relative to the reference user detected by the asynchronous information detection module 42, to obtain more accurate asynchronous information.

Correspondingly, the second detection module is configured to perform the TA adjustment on the one or more other users and the reference user according to the asynchronous information of the one or more other users relative to the reference user filtered by the second filtering module.

The apparatus according to the embodiment of the present invention has the following beneficial effects. The user asynchronous information is detected, so as to greatly improve the receiving performance of the users, and the combined asynchronous detection of the users is performed using the asynchronous information, so as to greatly improve the detection performance of the users. The asynchronous information may be detected by calculating the SNRs on the receiving antennas, or by calculating the energies on the receiving antennas, and the detection method is flexible and diverse. The detected asynchronous information is filtered, so that the asynchronous information is more accurate, and asynchronous demodulation is performed on the users using the filtered asynchronous information, so as to greatly improve the detection performance and receiving performance of the users, and decrease the BER. FIG 3 is a schematic view illustrating the effect of the present invention, in which performance curve 1 represents the asynchronous detection performance of asynchronous information equal to 2 when power offset does not exist between a target user and an interference user; performance curve 2 represents the performance when power offset does not exist between the target user and the interference user and the two users are synchronous; performance curve 3 represents the asynchronous detection performance of asynchronous information equal to 2 when the power of the interference user is 10 dB higher than that of the target user; performance curve 4 represents the performance when the power of the interference user is 10 dB higher than that of the target user and the two users are synchronous; and performance curve 5 represents the reference performance of a single user.

**Embodiment 3**

Referring to FIG 5, in an embodiment, the present invention provides another method for detecting multi-user asynchronous information, through which user asynchronous information is obtained by calculating differences of frame synchronous information between multiple users.

The method includes the following steps.

In step 201, performing channel estimation of at least two users, to obtain at least two pieces of frame synchronous information.

In step 202, taking a pre-determined user as a reference, wherein the pre-determined user is one of the at least two users; and

calculating differences of frame synchronous information between the pre-determined user and one or more other users except the pre-determined user, to obtain asynchronous information of the one or more other users relative to the pre-determined user, where the one or more other users are among the at least two users.

The performing the channel estimation of the at least two users to obtain the at least two pieces of frame synchronous information includes:

performing channel estimation of at least two users, to obtain at least two pieces of frame synchronous information and at least two groups of channel factors.

Correspondingly, the method further includes:

performing combined asynchronous detection on the other users and the pre-determined user using the asynchronous information of the one or more other users relative to the pre-determined user and the at least two groups of channel factors, so as to improve the multi-user detection performance.

Before the performing the combined asynchronous detection on the one or more other users and the pre-determined user using the asynchronous information of the one or more other users relative to the pre-determined user and the at least two groups of channel factors, the method further includes:

filtering the asynchronous information of the one or more other users relative to the pre-determined user, to obtain more accurate asynchronous information; and

correspondingly, performing the combined asynchronous detection on the one or more other users and the pre-determined user using the filtered asynchronous information, so as to improve the multi-user detection performance.

Alternatively, the method further includes:

performing channel estimation of at least two users according to the asynchronous information of the one or more other users relative to the pre-determined user, to obtain at least two groups of channel factors; and

performing combined asynchronous detection on the one or more other users and the pre-determined user using the asynchronous information of the one or more other users relative to the pre-determined user and the at least two groups of channel factors.

Before the performing the channel estimation of the at least two users according to the asynchronous information of the one or more other users relative to the pre-determined user, the method further includes:

filtering the asynchronous information of the one or more other users relative to the pre-determined user, so as to obtain more accurate asynchronous information;

performing channel estimation of at least two users using the filtered asynchronous information of the one or more other users relative to the pre-determined user, to obtain at least two groups of channel factors; and

correspondingly, performing combined asynchronous detection on the one or more other usersand the pre-determined user using the filtered asynchronous information of the one or more other users relative to the pre-determined user, and the at least two groups of channel factors, so as to improve the multi-user detection performance.

The method further includes:

performing TA adjustment on the one or more other users and the pre-determined user using the asynchronous information of the one or more other users relative to the pre-determined user.

Before the performing the TA adjustment on the one or more other users and the pre-determined user using the asynchronous information of the the one or more other users relative to the pre-determined user, the method further includes:

filtering the asynchronous information of the one or more other users relative to the pre-determined user, so as to obtain more accurate asynchronous information; and

correspondingly, performing the TA adjustment on the one or more other users and the pre-determined user using the filtered asynchronous information of the one or more other users relative to the pre-determined user, so as to keep the multiple users synchronous.

The method according to the embodiment of the present invention has the following beneficial effects. The user frame synchronous information is calculated to obtain the asynchronous information, the method for detecting the asynchronous information is simple and convenient, and the combined asynchronous detection of the at least two users is performed using the asynchronous information, so as to greatly improve the multi-user detection performance and receiving performance, and decrease the BER.

**Embodiment 4**

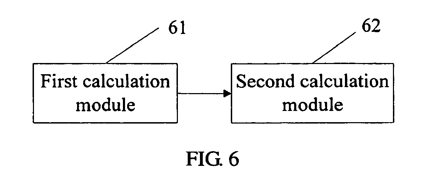

Referring to FIG 6, in an embodiment, the present invention provides another apparatus for detecting multi-user asynchronous information, through which user asynchronous information is obtained by calculating differences of frame synchronous information between multiple users.

The apparatus includes:

a first calculation module 61, configured to perform channel estimation of at least two users, to obtain at least two pieces of frame synchronous information; and

a second calculation module 62, configured to calculate differences of frame synchronous information between the pre-determined user and one or more other users except a pre-determined user according to the at least two pieces of frame synchronous information obtained by the first calculation module 61 by taking the pre-determined user as a reference, so as to obtain asynchronous information of the one or more other users relative to the pre-determined user, wherein the pre-determined user is one of the at least two users, and the one or more other users are among the at least two users.

The first calculation module 61 in the apparatus is specifically configured to perform channel estimation of at least two users, to obtain at least two pieces of frame synchronous information and at least two groups of channel factors.

Correspondingly, the apparatus further includes:

a first detection module, configured to perform combined asynchronous detection on the one or more other usersand the pre-determined user using the asynchronous information of the one or more other users relative to the pre-determined user obtained by the second calculation module 62 and the at least two groups of channel factors obtained by the first calculation module, so as to improve the multi-user detection performance.

The apparatus further includes:

a first filtering module, configured to filter the asynchronous information of the one or more other users relative to the pre-determined user obtained by the second calculation module 62, to obtain more accurate multi-user asynchronous information.

Correspondingly, the first detection module is configured to perform combined asynchronous detection on the one or more other users and the pre-determined user according to the asynchronous information of the one or more other usersrelative to the pre-determined user filtered by the first filtering module and the at least two groups of channel factors obtained by the first calculation module, so as to improve the multi-user detection performance.

The apparatus includes:

a third calculation module, configured to perform channel estimation of at least two users according to the asynchronous information of the one or more other usersrelative to the pre-determined user obtained by the second calculation module, to obtain at least two groups of channel factors; and

a second detection module, configured to perform combined asynchronous detection on the one or more other usersand the pre-determined user according to the asynchronous information of the one or more other usersrelative to the pre-determined user obtained by the second calculation module and the at least two groups of channel factors obtained by the third calculation module.

The apparatus further includes:

a second filtering module, configured to filter the asynchronous information of the one or more other users relative to the pre-determined user obtained by the second calculation module.

Correspondingly, the third calculation module is configured to perform channel estimation of at least two users according to the asynchronous information of the one or more other users relative to the pre-determined user filtered by the second filtering module, to obtain at least two groups of channel factors.

Correspondingly, the second detection module is configured to perform combined asynchronous detection on the one or more other users and the pre-determined user according to the filtered asynchronous information of the one or more other users relative to the pre-determined user obtained by the second filtering module and the at least two groups of channel factors obtained by the third calculation module according to the filtered asynchronous information.

The apparatus further includes:

a third detection module, configured to perform TA adjustment on the one or more other users and the pre-determined user using the asynchronous information of the one or more other users relative to the pre-determined user obtained by the second calculation module 62, so as to keep the multiple users synchronous.

The apparatus further includes:

a third filtering module, configured to filter the asynchronous information of the one or more other usersrelative to the pre-determined user obtained by the second calculation module 62, to obtain more accurate multi-user asynchronous information.

Correspondingly, the third detection module is configured to perform TA adjustment on the one or more other users and the pre-determined user according to the asynchronous information of the one or more other users relative to the pre-determined user filtered by the third filtering module, so as to keep the multiple users synchronous.

The apparatus according to the embodiment of the present invention has the following beneficial effects. The user frame synchronous information is calculated to obtain the asynchronous information, the method for detecting the asynchronous information is simple and convenient, and the combined asynchronous detection of the at least two users is performed using the asynchronous information, so as to greatly improve the multi-user detection performance and receiving performance, and decrease the BER.

The embodiments of the present invention may be implemented by software, and corresponding software programs may be stored in readable storage media, such as a hard disk, a buffer, or an optical disk of a computer.

The above descriptions are merely some exemplary embodiments of the present invention, but not intended to limit the scope of the present invention. Any modification, equivalent replacement, or improvement made without departing from the principle of the present invention shall fall within the scope of the present invention.

## Claims

1. A method for detecting multi-user asynchronous information, **characterized by** comprising:

performing channel estimation of at least two users, to obtain at least two pieces of frame synchronous information(201);
and
taking a pre-determined user as a reference, wherein the pre-determined user is one of the at least two users;calculating differences of frame synchronous information between the pre-determined user and one or more other users except the pre-determined user, to obtain asynchronous information of the one or more other users relative to the pre-determined user, wherein the one or more other users are among the at least two users(202);
wherein the method further comprising performing timing advance adjustment on the one or more other users and the pre-determined user using the asynchronous information of the one or more other users relative to the pre-determined user.

2. The method for detecting multi-user asynchronous information according to claim1, wherein the performing the channel estimation of the at least two users to obtain the at least two pieces of frame synchronous information(201) comprises:

performing channel estimation of at least two users, to obtain at least two pieces of frame synchronous information and at least two groups of channel factors; and
the method further comprises:

performing combined asynchronous detection on the one or more other users and the pre-determined user using the asynchronous information of the one or more other usersrelative to the pre-determined user and the at least two groups of channel factors.

3. The method for detecting multi-user asynchronous information according to claim 2, wherein before the performing the combined asynchronous detection on the one or more other users and the pre-determined user using the asynchronous information of the one or more other users relative to the pre-determined user and the at least two groups of channel factors, the method further comprises:

filtering the asynchronous information of the one or more other users relative to the pre-determined user; and
performing the combined asynchronous detection on the one or more other users and the pre-determined user using the filtered asynchronous information of the one or more other users relative to the pre-determined user and the at least two groups of channel factors.

4. The method for detecting multi-user asynchronous information according to claim 1, further comprising:

performing channel estimation of at least two users according to the asynchronous information of the one or more other usersrelative to the pro-determined user, to obtain at least two groups of channel factors; and
performing combined asynchronous detection on the one or more other users and the pre-determined user using the asynchronous information of the one or more other users relative to the pre-determined user and the at least two groups of channel factors.

5. The method for detecting multi-user asynchronous information according to claim 4, wherein before the performing the channel estimation of the at least two users according to the asynchronous information of the one or more other users relative to the pre-determined user, the method further comprises:

filtering the asynchronous information of the one or more other users relative to the pre-determined user;
performing channel estimation of at least two users using the filtered asynchronous information of the one or more other users relative to the pre-determined user, to obtain at least two groups of channel factors; and
performing combined asynchronous detection on the one or more other users and the pre-determined user using the filtered asynchronous information of the one or more other users relative to the pre-determined user and the at least two groups of channel factors.

6. The method for detecting multi-user asynchronous information according to claim 1, where before the performing the timing advance adjustment on the one or more other users and the pre-determined user using the asynchronous information of the one or more other users relative to the pre-determined user, the method further comprises:

filtering the the asynchronous information of the one or more other users relative to the pre-determined user; and
performing the TA adjustment on the one or more other users and the pre-determined user using the filtered asynchronous information of the one or more other users relative to the pre-determined user.

7. An apparatus for detecting multi-user asynchronous information, **characterized by** comprising:

a first calculation module(61), configured to perform channel estimation of at least two users, to obtain at least two pieces of frame synchronous information; and
a second calculation module(62), configured to calculate differences of frame synchronous information between the pre-determined user and one or more other users except a pre-determined user according to the at least two pieces of frame synchronous information obtained by the first calculation module, by taking the pre-determined user as a reference, to obtain synchronous information of the one or more other users relative to the pre-determined user, wherein the pre-determined user is one of the at least two users, and the one or more other users are among the at least two users;
wherein further comprising:

a third detection module, configured to performing timing advance (TA) adjustment on the one or more other users and the pre-determined user using the asynchronous information of the one or more other users relative to the pre-determined user obtained by the second calculation module.

8. The apparatus for detecting multi-user asynchronous information according to claim 7, wherein the first calculation module(61) is configured to perform channel estimation of the at least two users, to obtain at least two pieces of frame synchronous information and at least two groups of channel factors; and
the apparatus further comprises a first detection module, configured to perform combined asynchronous detection on the one or more other users and the pre-determined user, using the asynchronous information of the one or more other users relative to the pre-determined user obtained by the second calculation module and the at least two groups of channel factors obtained by the first calculation module.

9. The apparatus for detecting multi-user asynchronous information according to claim 7, further comprising:

a first filtering module, configured to filter the asynchronous information of the one or more other users relative to the pre-determined user obtained by the second calculation module,
wherein the first detection module is configured to perform the combined asynchronous detection on the one or more other users and the pre-determined user according to the asynchronous information of the one or more other users relative to the pre-determined user filtered by the first filtering module and the at least two groups of channel factors obtained by the first calculation module.

10. The apparatus for detecting multi-user asynchronous information according to claim 7, further comprising:

a third calculation module, configured to perform channel estimation of at least two users according to the asynchronous information of the one or more other users relative to the pre-determined user obtained by the second calculation module, to obtain at least two groups of channel factors; and
a second detection module, configured to peform combined asynchronous detection on the one or more other users and the pre-determined user according to the asynchronous information of the one or more other users relative to the pre-determined user obtained by the second calculation module and the at least two groups of channel factors obtained by the third calculation module.

11. The apparatus for detecting multi-user asynchronous information according to claim 7, further comprising:

a second filtering module, configured to filter the asynchronous information of the one or more other users relative to the pre-determined user obtained by the second calculation module,
wherein the third calculation module is configured to perform channel estimation of the at least two users according to the filtered asynchronous information of the one or more other users relative to the pre-determined user obtained by the second filtering module, to obtain at least two groups of channel factors; and
the second detection module is configured to perform the combined asynchronous detection on the one or more other users and the pre-determined user according to the filtered asynchronous information of the one or more other users relative to the pre-determined user obtained by the second filtering module and the at least two groups of channel factors obtained by the third calculation module according to the filtered asynchronous information.

12. The apparatus for detecting multi-user asynchronous information according to claim 7, further comprising:

a third filtering module, configured to filter the asynchronous information of the one or more other users relative to the pre-determined user obtained by the second calculation module,
wherein the third detection module is configured to perform timing advance adjustment on the one or more other usersand the pre-determined user according to the asynchronous information of the one or more other users relative to the pre-determined user filtered by the third filtering module.

**Patentansprüche**

1. Verfahren zum Detektieren asynchroner Mehrfachanwenderinformationen, **dadurch gekennzeichnet, dass** es Folgendes umfasst:

   Ausführen einer Kanalschätzung von wenigstens zwei Anwendern, um wenigstens zwei synchrone Rahmeninformationen zu erhalten (201);
   und
   Verwenden eines vorbestimmten Anwenders als eine Referenz, wobei der vorbestimmte Anwender einer der wenigstens zwei Anwender ist; Berechnen der Differenzen von synchronen Rahmeninformationen zwischen dem vorbestimmten Anwender und einem oder mehreren anderen Anwendern außer dem vorbestimmten Anwender, um asynchrone Informationen des einen oder der mehreren anderen Anwender relativ zu dem vorbestimmten Anwender zu erhalten, wobei der eine oder die mehreren anderen Anwender unter den wenigstens zwei Anwendern sind (202);
   wobei das Verfahren ferner das Ausführen einer Zeitvoreinstellung für den einen oder die mehreren anderen Anwender und den vorbestimmten Anwender unter Verwendung der asynchronen Informationen des einen oder der mehreren anderen Anwender relativ zu dem vorbestimmten Anwender umfasst.

2. Verfahren zum Detektieren asynchroner Mehrfachanwenderinformationen nach Anspruch 1, wobei das Ausführen der Kanalschätzung der wenigstens zwei Anwender, um die wenigstens zwei synchronen Rahmeninformationen zu erhalten (201), Folgendes umfasst:

   Ausführen der Kanalschätzung von wenigstens zwei Anwendern, um wenigstens zwei synchrone Rahmeninformationen und wenigstens zwei Gruppen von Kanalfaktoren zu erhalten; und
   das Verfahren ferner Folgendes umfasst:

   Ausführen von kombinierter asynchroner Detektion für den einen oder die mehreren anderen Anwender und den vorbestimmten Anwender unter Verwendung der asynchronen Informationen des einen oder der mehreren anderen Anwender relativ zu dem vorbestimmten Anwender und der wenigstens zwei Gruppen von Kanalfaktoren.

3. Verfahren zum Detektieren asynchroner Mehrfachanwenderinformationen nach Anspruch 2, wobei das Verfahren vor dem Ausführen der kombinierten asynchronen Detektion für den einen oder die mehreren anderen Anwender und den vorbestimmten Anwender unter Verwendung der asynchronen Informationen des einen oder der mehreren anderen Anwender relativ zu dem vorbestimmten Anwender und der wenigstens zwei Gruppen von Kanalfaktoren Folgendes umfasst:

   Filtern der asynchronen Informationen des einen oder der mehreren anderen Anwender relativ zu dem vorbestimmten Anwender; und
   Ausführen der kombinierten asynchronen Detektion für den einen oder die mehreren anderen Anwender und den vorbestimmten Anwender unter Verwendung der gefilterten asynchronen Informationen des einen oder der mehreren anderen Anwender relativ zu dem vorbestimmten Anwender und der wenigstens zwei Gruppen von Kanalfaktoren.

4. Verfahren zum Detektieren asynchroner Mehrfachanwenderinformationen nach Anspruch 1, das ferner Folgendes umfasst:

   Ausführen einer Kanalschätzung von wenigstens zwei Anwendern gemäß den asynchronen Informationen des einen oder der mehreren anderen Anwender relativ zu dem vorbestimmten Anwender, um wenigstens zwei Gruppen von Kanalfaktoren zu erhalten; und
   Ausführen einer kombinierten asynchronen Detektion für den einen oder die mehreren anderen Anwender und den vorbestimmten Anwender unter Verwendung der asynchronen Informationen des einen oder der mehreren anderen Anwender relativ zu dem vorbestimmten Anwender und der wenigstens zwei Gruppen von Kanalfaktoren.

5. Verfahren zum Detektieren asynchroner Mehrfachanwenderinformationen nach Anspruch 4, wobei das Verfahren vor dem Ausführen der Kanalschätzung der wenigstens zwei Anwender gemäß den asynchronen Informationen des einen oder der mehreren anderen Anwender relativ zu dem vorbestimmten Anwender ferner Folgendes umfasst:

Filtern der asynchronen Informationen des einen oder der mehreren anderen Anwender relativ zu dem vorbestimmten Anwender;

Ausführen einer Kanalschätzung von wenigstens zwei Anwendern unter Verwendung der gefilterten asynchronen Informationen des einen oder der mehreren anderen Anwender relativ zu dem vorbestimmten Anwender, um wenigstens zwei Gruppen von Kanalfaktoren zu erhalten; und

Ausführen einer kombinierten asynchronen Detektion für den einen oder die mehreren anderen Anwender und den vorbestimmten Anwender unter Verwendung der gefilterten asynchronen Informationen des einen oder der mehreren anderen Anwender relativ zu dem vorbestimmten Anwender und der wenigstens zwei Gruppen von Kanalfaktoren.

6. Verfahren zum Detektieren asynchroner Mehrfachanwenderinformationen nach Anspruch 1, wobei das Verfahren vor dem Ausführen der Zeitvoreinstellung für den einen oder die mehreren anderen Anwender und den vorbestimmten Anwender unter Verwendung der asynchronen Informationen des einen oder der mehreren anderen Anwender relativ zu dem vorbestimmten Anwender ferner Folgendes umfasst:

Filtern der asynchronen Informationen des einen oder der mehreren anderen Anwender relativ zu dem vorbestimmten Anwender; und

Ausführen der TA-Einstellung für den einen oder die mehreren anderen Anwender und den vorbestimmten Anwender unter Verwendung der gefilterten asynchronen Informationen des einen oder der mehreren anderen Anwender relativ zu dem vorbestimmten Anwender.

7. Vorrichtung zum Detektieren asynchroner Mehrfachanwenderinformationen, **dadurch gekennzeichnet, dass** sie Folgendes umfasst:

ein erstes Berechnungsmodul (61), das konfiguriert ist, eine Kanalschätzung von wenigstens zwei Anwendern auszuführen, um wenigstens zwei synchrone Rahmeninformationen zu erhalten; und

ein zweites Berechnungsmodul (62), das konfiguriert ist, Differenzen von synchronen Rahmeninformationen zwischen dem vorbestimmten Anwender und dem einen oder den mehreren anderen Anwendern außer einem vorbestimmten Anwender gemäß den wenigstens zwei durch das erste Berechnungsmodul erhaltenen synchronen Rahmeninformationen durch Verwenden des vorbestimmten Anwenders als eine Referenz zu berechnen, um synchrone Informationen des einen oder der mehreren anderen Anwender relativ zu dem vorbestimmten Anwender zu erhalten, wobei der vorbestimmte Anwender einer der wenigstens zwei Anwender ist und der eine oder die mehreren anderen Anwender unter den wenigstens zwei Anwendern sind;

wobei die Vorrichtung ferner Folgendes umfasst:

ein drittes Detektionsmodul, das konfiguriert ist, eine Zeitvoreinstellung (TA-Einstellung) für den einen oder die mehreren anderen Anwender und den vorbestimmten Anwender unter Verwendung der durch das zweite Berechnungsmodul erhaltenen asynchronen Informationen des einen oder der mehreren anderen Anwender relativ zu dem vorbestimmten Anwender auszuführen.

8. Vorrichtung zum Detektieren asynchroner Mehrfachanwenderinformationen nach Anspruch 7, wobei das erste Berechnungsmodul (61) konfiguriert ist, eine Kanalschätzung der wenigstens zwei Anwender auszuführen, um wenigstens zwei synchrone Rahmeninformationen und wenigstens zwei Gruppen von Kanalfaktoren zu erhalten; und die Vorrichtung ferner ein erstes Detektionsmodul umfasst, das konfiguriert ist, eine kombinierte asynchrone Detektion für den einen oder die mehreren anderen Anwender und den vorbestimmten Anwender unter Verwendung der durch das zweite Berechnungsmodul erhaltenen asynchronen Informationen des einen oder der mehreren anderen Anwender relativ zu dem vorbestimmten Anwender und der durch das erste Berechnungsmodul erhaltenen wenigstens zwei Gruppen von Kanalfaktoren auszuführen.

9. Vorrichtung zum Detektieren asynchroner Mehrfachanwenderinformationen nach Anspruch 7, die ferner Folgendes umfasst:

ein Filtermodul, das konfiguriert ist, die durch das zweite Berechnungsmodul erhaltenen asynchronen Informationen des einen oder der mehreren anderen Anwender relativ zu dem vorbestimmten Anwender zu filtern, wobei das erste Detektionsmodul konfiguriert ist, die kombinierte asynchrone Detektion für den einen oder die mehreren anderen Anwender und den vorbestimmten Anwender gemäß den durch das erste Filtermodul gefilterten asynchronen Informationen des einen oder der mehreren anderen Anwender relativ zu dem vorbestimmten Anwender und der durch das erste Berechnungsmodul erhaltenen wenigstens zwei Gruppen von Kanalfaktoren auszuführen.

10. Vorrichtung zum Detektieren asynchroner Mehrfachanwenderinformationen nach Anspruch 7, die ferner Folgendes umfasst:

ein drittes Berechnungsmodul, das konfiguriert ist, eine Kanalschätzung von wenigstens zwei Anwendern gemäß den durch das zweite Berechnungsmodul erhaltenen asynchronen Informationen des einen oder der mehreren anderen Anwender relativ zu dem vorbestimmten Anwender auszuführen, um wenigstens zwei Gruppen von Kanalfaktoren zu erhalten; und

ein zweites Detektionsmodul, das konfiguriert ist, eine kombinierte asynchrone Detektion für den einen oder die mehreren anderen Anwender und den vorbestimmten Anwender gemäß den durch das zweite Berechnungsmodul erhaltenen asynchronen Informationen des einen oder der mehreren anderen Anwender relativ zu dem vorbestimmten Anwender und den durch das dritte Berechnungsmodul erhaltenen wenigstens zwei Gruppen von Kanalfaktoren auszuführen.

11. Vorrichtung zum Detektieren asynchroner Mehrfachanwenderinformationen nach Anspruch 7, die ferner Folgendes umfasst:

ein zweites Filtermodul, das konfiguriert ist, die durch das zweite Berechnungsmodul erhaltenen asynchronen Informationen des einen oder der mehreren anderen Anwender relativ zu dem vorbestimmten Anwender zu filtern,

wobei das dritte Berechnungsmodul konfiguriert ist, eine Kanalschätzung von den wenigstens zwei Anwendern gemäß den durch das zweite Filtermodul erhaltenen gefilterten asynchronen Informationen des einen oder der mehreren anderen Anwender relativ zu dem vorbestimmten Anwender auszuführen, um wenigstens zwei Gruppen von Kanalfaktoren zu erhalten; und

das zweite Detektionsmodul konfiguriert ist, die kombinierte asynchrone Detektion für den einen oder die mehreren anderen Anwender und den vorbestimmten Anwender gemäß den durch das zweite Filtermodul erhaltenen gefilterten asynchronen Informationen des einen oder der mehreren anderen Anwender relativ zu dem vorbestimmten Anwender und der wenigstens zwei Gruppen von Kanalfaktoren auszuführen, die durch das dritte Berechnungsmodul gemäß den gefilterten asynchronen Informationen erhalten werden.

12. Vorrichtung zum Detektieren asynchroner Mehrfachanwenderinformationen nach Anspruch 7, die ferner Folgendes umfasst:

ein drittes Filtermodul, das konfiguriert ist, die durch das zweite Berechnungsmodul erhaltenen asynchronen Informationen des einen oder der mehreren anderen Anwender relativ zu dem vorbestimmten Anwender zu filtern,

wobei das dritte Detektionsmodul konfiguriert ist, eine Zeitvoreinstellung für den einen oder die mehreren anderen Anwender und den vorbestimmten Anwender gemäß den durch das dritte Filtermodul gefilterten asynchronen Informationen des einen oder der mehreren anderen Anwender relativ zu dem vorbestimmten Anwender auszuführen.

## Revendications

1. Procédé pour détecter des informations asynchrones d'utilisateurs multiples, **caractérisé en ce qu'**il comprend les étapes suivantes :

effectuer une estimation de canal d'au moins deux utilisateurs, pour obtenir au moins deux éléments d'informations synchrones de trame (201) ; et

prendre un utilisateur prédéterminé comme référence, où l'utilisateur prédéterminé est un des au moins deux utilisateurs ; calculer des différences d'informations synchrones de trame entre l'utilisateur prédéterminé et un ou plusieurs autres utilisateurs à l'exception de l'utilisateur prédéterminé, pour obtenir des informations asynchrones de l'un ou plusieurs autres utilisateurs relativement à l'utilisateur prédéterminé, où l'un ou plusieurs des autres utilisateurs se trouvent parmi les au moins deux utilisateurs (202) ; où le procédé comprend en outre d'effectuer un réglage d'avance de temps sur l'un ou plusieurs autres utilisateurs et l'utilisateur prédéterminé au moyen des informations asynchrones de l'un ou plusieurs autres utilisateurs relativement à l'utilisateur prédéterminé.

2.  Procédé pour détecter des informations asynchrones d'utilisateurs multiples selon la revendication 1, dans lequel effectuer l'estimation de canal des au moins deux utilisateurs pour obtenir les au moins deux éléments d'informations synchrones de trame (201) comprend les étapes suivantes :

    effectuer une estimation de canal des au moins deux utilisateurs, pour obtenir au moins deux éléments d'informations synchrones de trame et au moins deux groupes de facteurs de canal ; et
    le procédé comprend en outre l'étape suivante :

      effectuer une détection asynchrone combinée sur l'un ou plusieurs autres utilisateurs et l'utilisateur prédéterminé au moyen des informations asynchrones de l'un ou plusieurs autres utilisateurs relativement à l'utilisateur prédéterminé et aux au moins deux groupes de facteurs de canal.

3.  Procédé pour détecter des informations asynchrones d'utilisateurs multiples selon la revendication 2, dans lequel, avant d'effectuer la détection asynchrone combinée sur l'un ou plusieurs autres utilisateurs et l'utilisateur prédéterminé, au moyen des informations asynchrones de l'un ou plusieurs autres utilisateurs relativement à l'utilisateur prédéterminé et aux au moins deux groupes de facteurs de canal, le procédé comprend en outre les étapes suivantes :

    filtrer les informations asynchrones de l'un ou plusieurs autres utilisateurs relativement à l'utilisateur prédéterminé ; et
    effectuer la détection asynchrone combinée sur l'un ou plusieurs autres utilisateurs et l'utilisateur prédéterminé au moyen des informations asynchrones de l'un ou plusieurs autres utilisateurs relativement à l'utilisateur prédéterminé et aux au moins deux groupes de facteurs de canal.

4.  Procédé pour détecter des informations asynchrones d'utilisateurs multiples selon la revendication 1, comprenant en outre les étapes suivantes :

    effectuer une estimation de canal d'au moins deux utilisateurs, conformément aux informations asynchrones de l'un ou plusieurs autres utilisateurs relativement à l'utilisateur prédéterminé, pour obtenir au moins deux groupes de facteurs de canal ;
    et
    effectuer une détection asynchrone combinée sur l'un ou plusieurs autres utilisateurs et l'utilisateur prédéterminé au moyen des informations asynchrones de l'un ou plusieurs autres utilisateurs relativement à l'utilisateur prédéterminé et aux au moins deux groupes de facteurs de canal.

5.  Procédé pour détecter des informations asynchrones d'utilisateurs multiples selon la revendication 4, dans lequel, avant d'effectuer l'estimation de canal des au moins deux utilisateurs, conformément aux informations asynchrones de l'un ou plusieurs autres utilisateurs relativement à l'utilisateur prédéterminé, le procédé comprend en outre les étapes suivantes :

    filtrer les informations asynchrones de l'un ou plusieurs autres utilisateurs relativement à l'utilisateur prédéterminé ;
    effectuer l'estimation de canal des au moins deux utilisateurs au moyen des informations asynchrones filtrées de l'un ou plusieurs autres utilisateurs relativement à l'utilisateur prédéterminé, pour obtenir au moins deux groupes de facteurs de canal ; et
    effectuer la détection asynchrone combinée sur l'un ou plusieurs autres utilisateurs et l'utilisateur prédéterminé au moyen des informations asynchrones filtrées de l'un ou plusieurs autres utilisateurs relativement à l'utilisateur prédéterminé et aux au moins deux groupes de facteurs de canal.

6.  Procédé pour détecter des informations asynchrones d'utilisateurs multiples selon la revendication 1, dans lequel, avant d'effectuer le réglage d'avance de temps sur l'un ou plusieurs autres utilisateurs et l'utilisateur prédéterminé au moyen des informations asynchrones de l'un ou plusieurs autres utilisateurs relativement à l'utilisateur prédéterminé, le procédé comprend en outre les étapes suivantes :

    filtrer les informations asynchrones de l'un ou plusieurs autres utilisateurs relativement à l'utilisateur prédéterminé ; et
    effectuer le réglage TA sur l'un ou plusieurs autres utilisateurs et l'utilisateur prédéterminé au moyen des informations asynchrones filtrées de l'un ou plusieurs autres utilisateurs relativement à l'utilisateur prédéterminé.

7. Appareil pour détecter des informations asynchrones d'utilisateurs multiples, **caractérisé en ce qu'**il comprend :

un premier module de calcul (61), configuré pour effectuer une estimation de canal d'au moins deux utilisateurs, pour obtenir au moins deux éléments d'informations synchrones de trame ; et
un deuxième module de calcul (62) configuré pour calculer des différences d'informations synchrones de trame entre l'utilisateur prédéterminé et un ou plusieurs autres utilisateurs, à l'exception de l'utilisateur prédéterminé, conformément aux au moins deux éléments d'informations synchrones de trame obtenus par le premier module de calcul, en prenant l'utilisateur prédéterminé comme référence, pour obtenir des informations synchrones de l'un ou plusieurs autres utilisateurs relativement à l'utilisateur prédéterminé, où l'utilisateur prédéterminé est un des au moins deux utilisateurs, et l'un ou plusieurs autres utilisateurs se trouvent parmi les au moins deux utilisateurs ;
où le procédé comprend en outre :

un troisième module de détection, configuré pour effectuer un réglage d'avance de temps (TA) sur l'un ou plusieurs autres utilisateurs et l'utilisateur prédéterminé au moyen des informations asynchrones de l'un ou plusieurs autres utilisateurs relativement à l'utilisateur prédéterminé, obtenues par le deuxième module de calcul.

8. Appareil pour détecter des informations asynchrones d'utilisateurs multiples selon la revendication 7, dans lequel le premier module de calcul (61) est configuré pour effectuer une estimation de canal des au moins deux utilisateurs, pour obtenir au moins deux éléments d'informations synchrones de trame et au moins deux groupes de facteurs de canal ; et
l'appareil comprend en outre un premier module de détection, configuré pour effectuer une détection asynchrone combinée sur l'un ou plusieurs autres utilisateurs et l'utilisateur prédéterminé au moyen des informations asynchrones de l'un ou plusieurs autres utilisateurs relativement à l'utilisateur prédéterminé, obtenues par le deuxième module de calcul et les au moins deux groupes de facteurs de canal obtenus par le premier module de calcul.

9. Appareil pour détecter des informations asynchrones d'utilisateurs multiples selon la revendication 7, comprenant en outre :

un premier module de filtrage, configuré pour filtrer les informations asynchrones de l'un ou plusieurs autres utilisateurs relativement à l'utilisateur prédéterminé, obtenues par le deuxième module de calcul,
où le premier module de détection est configuré pour effectuer la détection asynchrone combinée sur l'un ou plusieurs autres utilisateurs et l'utilisateur prédéterminé, conformément aux informations asynchrones de l'un ou plusieurs autres utilisateurs relativement à l'utilisateur prédéterminé, filtrées par le premier module de filtrage et les au moins deux groupes de facteurs de canal obtenus par le premier module de calcul.

10. Appareil pour détecter des informations asynchrones d'utilisateurs multiples selon la revendication 7, comprenant en outre :

un troisième module de calcul, configuré pour effectuer une estimation de canal d'au moins deux utilisateurs, conformément aux informations asynchrones de l'un ou plusieurs autres utilisateurs relativement à l'utilisateur prédéterminé, obtenues par le deuxième module de calcul, pour obtenir au moins deux groupes de facteurs de canal ; et
un deuxième module de détection, configuré pour effectuer une détection asynchrone combinée sur l'un ou plusieurs autres utilisateurs et l'utilisateur prédéterminé, conformément aux informations asynchrones de l'un ou plusieurs autres utilisateurs relativement à l'utilisateur prédéterminé, obtenues par le deuxième module de calcul et les au moins deux groupes de facteurs de canal obtenus par le troisième module de calcul.

11. Appareil pour détecter des informations asynchrones d'utilisateurs multiples selon la revendication 7, comprenant en outre :

un deuxième module de filtrage, configuré pour filtrer les informations asynchrones de l'un ou plusieurs autres utilisateurs relativement à l'utilisateur prédéterminé, obtenues par le deuxième module de calcul,
où le troisième module de calcul est configuré pour effectuer une estimation de canal des au moins deux utilisateurs, conformément aux informations asynchrones filtrées de l'un ou plusieurs autres utilisateurs relativement à l'utilisateur prédéterminé, obtenues par le deuxième module de filtrage, pour obtenir au moins deux groupes de facteurs de canal ; et

le deuxième module de détection est configuré pour effectuer la détection asynchrone combinée sur l'un ou plusieurs autres utilisateurs et l'utilisateur prédéterminé, conformément aux informations asynchrones filtrées de l'un ou plusieurs autres utilisateurs relativement à l'utilisateur prédéterminé, obtenues par le deuxième module de filtrage et les au moins deux groupes de facteurs de canal obtenus par le troisième module de calcul conformément aux informations asynchrones filtrées.

**12.** Appareil pour détecter des informations asynchrones d'utilisateurs multiples selon la revendication 7, comprenant en outre :

un troisième module de filtrage, configuré pour filtrer les informations asynchrones de l'un ou plusieurs autres utilisateurs relativement à l'utilisateur prédéterminé obtenues par le deuxième module de calcul,

où le troisième module de détection est configuré pour effectuer un réglage d'avance de temps sur l'un ou plusieurs autres utilisateurs et l'utilisateur prédéterminé, conformément aux informations asynchrones de l'un ou plusieurs autres utilisateurs relativement à l'utilisateur prédéterminé, filtrées par le troisième module de filtrage.

FIG. 1

| Perform channel estimation respectively according to at least two pieces of preset asynchronous information of other users relative to a reference user, to obtain at least two groups of channel factors | 101 |

| Calculate information of receiving antennas according to the at least two groups of channel factors, and detect asynchronous information of the other users relative to the reference user according to the information of the receiving antennas | 102 |

FIG. 2

FIG. 3

FIG. 4

FIG. 5

FIG. 6

**EP 2 373 078 B1**

**REFERENCES CITED IN THE DESCRIPTION**

**Patent documents cited in the description**

- EP 1887707 A1